# EUROPEAN PATENT SPECIFICATION

(11) **EP 0 498 307 B1**
(45) Date of publication and mention of the grant of the patent: **28.07.1999**
(21) Application number: 92101572.3
(22) Date of filing: 30.01.1992
(51) Int. Cl.: G06F 9/445

(54) **Information processing apparatus**
Datenverarbeitungsgerät
Appareil de traitement d'information

(30) Priority: 04.02.1991 JP 3570791
(43) Date of publication of application: 12.08.1992
(73) Proprietor: SONY CORPORATION, Tokyo (JP)
(72) Inventor: Ikuya, Sano, Shinagawa-ku, Tokyo (JP)
(74) Representative: Körber, Wolfhart, Dr.rer.nat.

(56) References cited:
- EP-A- 0 448 225
- DE-A- 3 540 626
- FR-A- 2 508 676

## Description

### BACKGROUND OF THE INVENTION

### Field of the Invention

The present invention generally relates to information processing apparatus and, more particularly, is directed to an information processing apparatus in which a designated special function is added to an ordinary function which is inherently executed by an ordinary software (program) and this special function can be operated by the ordinary software.

### Description of the Related Art

In the conventional hardware having a keyboard, when a power switch is solely operated, an ordinary software (program) is executed. If other predetermined keys (normally a plurality of keys) are simultaneously depressed and then the power switch is turned on, an independent software different from the ordinary software also can be activated. Therefore, a serviceman, for example, can execute a software necessary for the services, if necessary.

However, a small portable hardware, e.g., portable computer device is not provided with a keyboard so that a spare software cannot be activated by the above conventional method. Further, in order to store other software in addition to the ordinary software, a memory of larger storage capacity is needed, which makes the hardware more expensive.

In the European Patent Application EP-A-O 448 225, which is a prior art document according to Art. 54 (3)EPC with respect to the present application, an information processing apparatus is described, on which an unusual process such as a correction process of coordinate information input by an input pen is executed if the input pen is directed to a specific area of an input tablet during switching on the power supply. After the program of the unusual process is executed the unusual process ends and the usual program can be started. A simultaneous or parallel execution of the usual and the unusual program is not possible.

### OBJECTS AND SUMMARY OF THE INVENTION

Therefore, an object of the present invention is to provide an improved information processing apparatus in which the aforesaid shortcomings and disadvantages encountered with the prior art can be eliminated.

More specifically, an object of the present invention is to provide an information processing apparatus in which other software can be executed without increasing the capacity of a memory used therein comparatively.

Another object of the present invention is to provide an information processing apparatus which can be made inexpensive.

Still another object of the present invention is to provide an information processing apparatus which can be applied to a wide variety of electronic apparatus such as a portable computer or the like.

According to claim 1 an information processing apparatus of the present invention comprises a coordinate information inputting device for pointing to a predetermined area, a memory for storing a basic program and an additional program, a power switch, and a controller for performing control such that, when the power switch is operated and the inputting device points to the predetermined area, the additional program is added to the basic program and the additional program and the basic program are operated in parallel.

A special function program associated with each predetermined area on a tablet is stored in advance in the memory. If a predetermined area on the information inputting device is designated with a pen when the power switch is turned on, then the controller adds the special function program associated with the predetermined area designated and which is stored in the memory to an ordinary software. Then, when the ordinary software is operated, the special program added to the ordinary software can be operated. Thus, the special function program is added to the ordinary software and the special function program can be operated on the ordinary software.

### BRIEF DESCRIPTION OF THE DRAWINGS

A better understanding of other objects, features, and advantages of the present invention will be obtained from the following detailed description of an illustrative embodiment thereof, in conjunction with the accompanying drawings in which:
FIG. 1 is a perspective view illustrating an overall arrangement of an embodiment of a portable computer to which an information processing apparatus of the present invention is applied;
FIG. 2 is a sectional view illustrating a structure of a display screen used in the embodiment of FIG. 1;
FIG. 3 is a sectional view illustrating a structure of a fluorescent plate in FIG. 2;
FIG. 4 is a block diagram showing a relation between an LCD and a tablet shown in FIG. 1 from an electrical connection standpoint;
FIG. 5 is a block diagram showing an overall arrangement of the portable computer in the embodiment shown in FIG. 1 from an electrical standpoint;
FIG. 6 is a schematic diagram showing a main portion of the display screen of FIG. 1 in an enlarged scale;
FIG. 7 is a flowchart to which references will be made in explaining operation of the embodiment of the present invention;
FIG. 8 is a schematic diagram showing the display screen of FIG. 1 in an enlarged scale;
FIG. 9 is a schematic diagram showing in an enlarged scale the display screen of FIG. 1 to which the present invention is applied; and
FIGS. 10 through 15 are respectively schematic diagrams showing in an enlarged scale the display screen of FIG. 1 and to which references will be made in explaining operation for digitally correcting parallax by using a monitor function;

### DETAILED DESCRIPTION OF THE PREFERRED EMBODIMENT

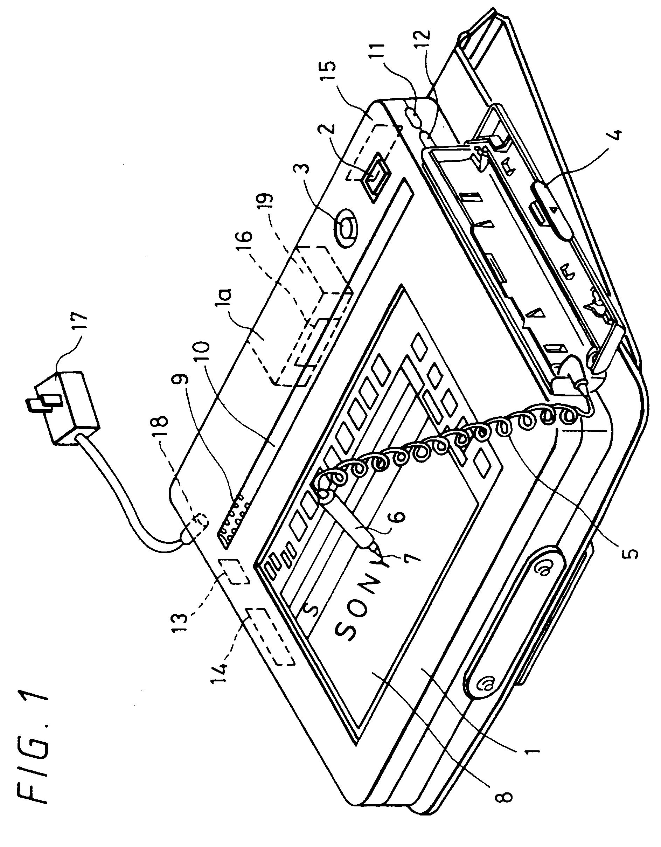

Referring to the drawings in detail, and initially to FIG. 1, an overall arrangement of an embodiment of an information processing apparatus according to the present invention will be described. In this embodiment, the information processing apparatus of the present invention is preferably applied to a portable computer.

As shown in FIG. 1, a computer unit 1 has a power switch 2 which is turned on when this portable computer is in use and which is turned off when the portable computer is not in use. A brightness control switch 3 is provided on the left of the power switch 2 in order to control brightness of a display screen 8 (i.e., brightness of a liquid crystal display (LCD) 22 which will be described later). A case 4 is provided on the side portion of the computer unit 1 and the case 4 houses therein a tablet pen 6 having a switch 7 coupled to the top thereof and which is coupled to the computer unit 1 via a cord 5 when the tablet pen 6 is not in use. The tablet pen 6 can be placed in a groove or slit 10 horizontally formed on the upper portion of the computer unit 1 under the condition such that it is taken out from the case 4. A speaker 9 is disposed at the left side portion of the slit 10 so as to emanate a predetermined sound.

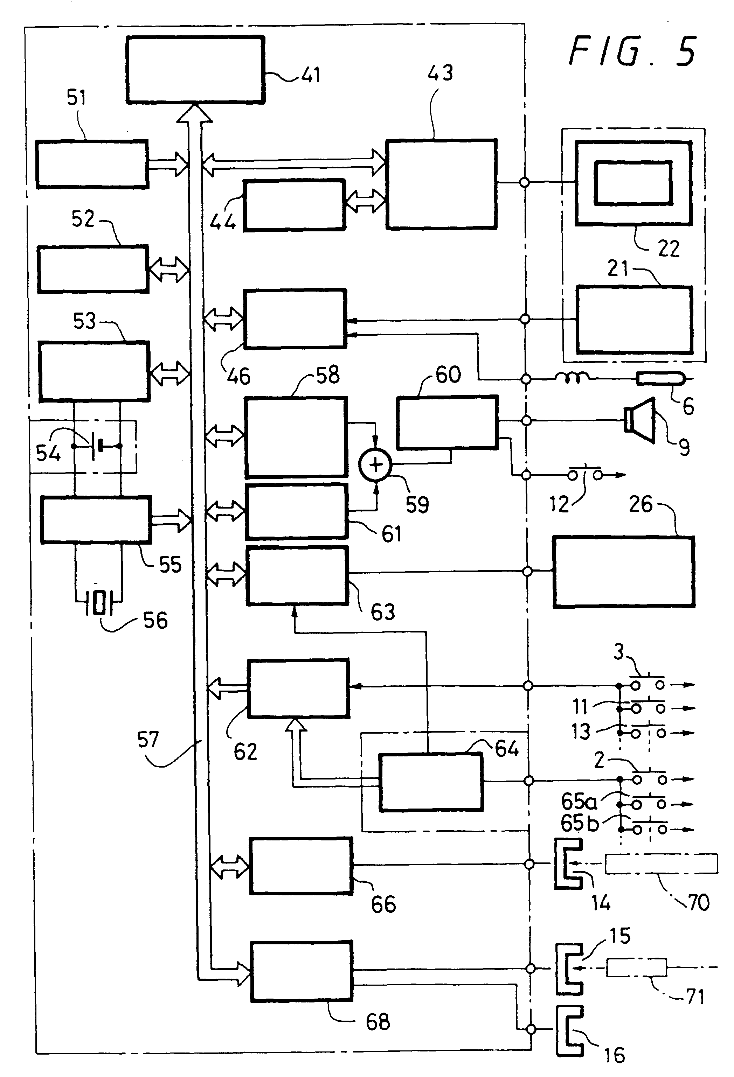

Two switches 11 and 12 are provided on the upper right side of the computer unit 1. The switch 11 is a change-over switch that switches a brightness of a back-light, which will be described later, in two stages, for example. The switch 12 is a volume change-over switch that switches volume of the sound generated from the speaker 9 in three stages, for example. A switch 13 is a stop switch provided on the left side portion of the computer unit 1 and operated to stop a predetermined operation (e.g., to disable the speaker 9) at a midway. An IC socket (slot) 14 is disposed on the left side portion of the computer unit 1 to receive a memory (IC) card 70 (see FIG. 5). A socket 15 is provided at the rear portion of the computer unit 1 and a socket 16 also is disposed in the inside of a battery compartment 1a which is formed on the rear portion of the computer unit 1 so as to house a battery 19 therein. These sockets 15 and 16 are coupled with, for example, a RS232C cable, a MODEM (modulator and demodulator), other adapters or the like. Further, a connection terminal 18 for an AC adapter 17 is provided on the upper left portion of the computer unit 1.

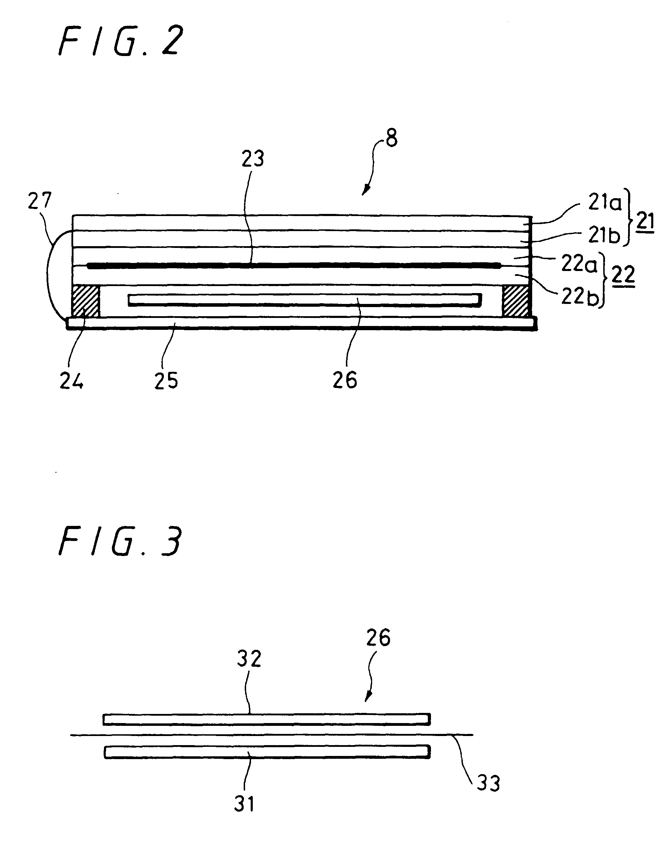

An example of the structure of the display screen 8 will be described more fully with reference to FIG. 2 forming a sectional view. In this embodiment of display screen 8, as shown in FIG. 2, a tablet 21 is provided on the top of the display screen 8 and the tablet 21 is comprised of a tablet 21a which is used to detect the position in the X axis direction and a tablet 21b which is used to detect the position in the Y axis direction. An LCD 22 is provided below the table 21 and the LCD 22 is composed of upper and lower glass plates 22a, 22b and a liquid crystal 23 sandwiched between the glass plates 22a and 22b. A fluorescent plate (EL) 26 is provided below the LCD 22. When the fluorescent plate 26 provided as the back-light emits a light, the light from the fluorescent plate 26 radiates the LCD 22. The tablets 21a and 21b are each formed of a transparent material so that a user can see an image displayed on the liquid crystal 23 from above in FIG. 2. A printed circuit board (PCB) 25 incorporates therein parts (not shown) and electrically coupled to the LCD 22 by means of a rubber connector 24. The printed circuit board 25 also is electrically coupled to the tablet 21 by means of a conductive film 27.

An example of the structure of the fluorescent plate 26 will be described more in detail with reference to FIG. 3. In this embodiment of fluorescent plate 26, as shown in FIG. 3, an insulating film 33 is disposed between an electrode 31 and a light generating unit (i.e., other electrode) 32. The light emitting unit 32 is energized by the application of a predetermined voltage between the electrode 31 and the light emitting unit 32 to emit a light. The electrode 31 and the light emitting unit 32 are formed as plates so that the display screen 8 can be uniformly irradiated.

The back-light is not limited to the fluorescent plate 26 and other fluorescent lamps might be used as the back-light source. Further, one such variant is also possible: A fluorescent lamp is provided on the side portion of the computer unit as a side light source and a light from the fluorescent lamp is transmitted to the rear portion of the LCD 22 by means of a light transmitting member, thereby radiating the display screen 8.

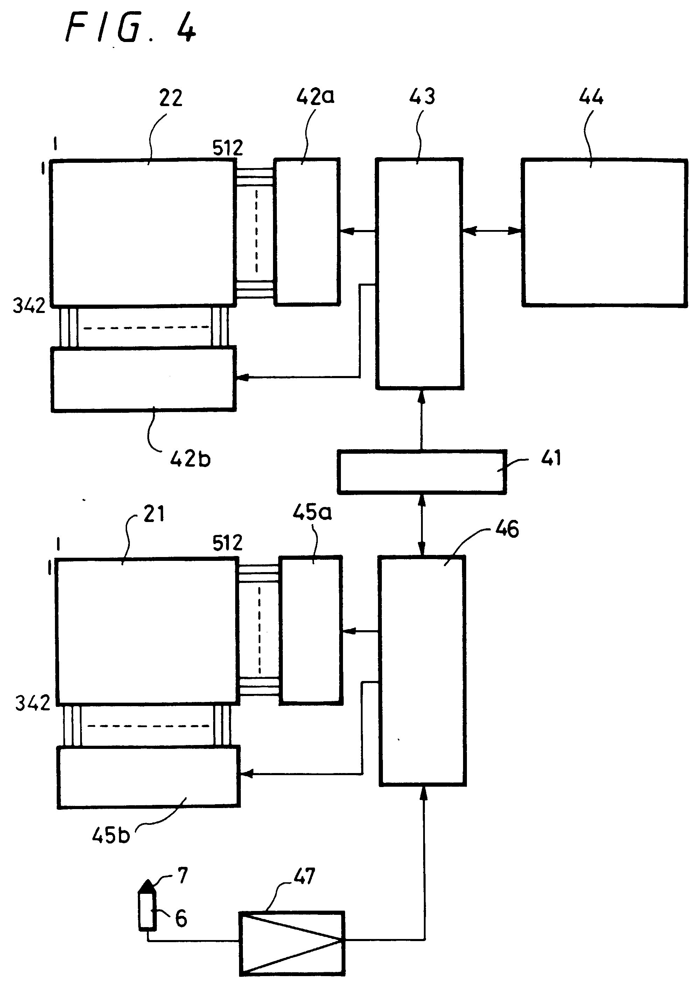

FIG. 4 shows in block form an electrical connection between the tablet 21 and the LCD 22, and to which references will be made in explaining principle of how to detect the position by the tablet and of how to display an image by the LCD.

Referring to FIG. 4, it will be seen that the tablet 21 includes, for example, 512 electrodes in the X axis direction and 342 electrodes in the Y axis direction, for example, thus making it possible to detect 512 x 342 pixels (picture elements). A tablet controller 46 controls a clock generating circuit 45a to sequentially apply a predetermined voltage to the 342 electrodes one by one. Then, the tablet controller 46 controls a clock generating circuit 45b to sequentially apply a predetermined voltage to the 512 electrodes one by one. More specifically, the tablet 21 is scanned by clock voltages generated from the clock generating circuits 45a and 45b. When the tablet pen 6 is moved close to a predetermined position on the tablet 21, a predetermined electrostatic capacitance is formed between the tablet 21 and the tablet pen 6. Then, when the tablet pen 6 presses the tablet 21 with pressure, the switch 7 disposed at the top of the pen 6 is turned on so that an electric charge is generated between the pen 6 and a predetermined electrode of the tablet 21 which is then detected is supplied to the tablet controller 46 via an amplifier 47. Because the tablet controller 46 controls the clock generating timing of the clock generating circuits 45a and 45b, it is possible to detect the position at which the pen 6 presses the tablet 21 by the detected signal supplied from the pen 6 thereto and the clock generating timing. The tablet controller 46 supplies a central processing unit (CPU) 41 with operation coordinate informations detected with respect to the pen 6. The CPU 41 constantly monitors the position (pen-down position) at which the switch 7 is turned on by touching the tablet 21 with the pen 6 with pressure and the position (pen-up position) at which the switch 7 is turned off by releasing the pen 6 from the tablet 21. That is, the CPU 41 receives an input information upon the pen-down operation and determined the input information upon the pen-up operation. The above-mentioned CPU 41 forms a control means of the present invention.

The CPU 41 controls an LCD controller 43 to write data corresponding to an image to be displayed in a memory (V-RAM) 44. The LCD controller 43 reads data out of the memory 44 and supplies a signal corresponding to the data thus read-out to an LCD driver 42b. The LCD 22 includes 512 electrodes in the horizontal direction and 342 electrodes in the vertical direction in association with the tablet 21. An LCD driver 42a sequentially applies a predetermined voltage to each of the 342 electrodes, while the LCD driver 42b sequentially applies a voltage corresponding to image data to each of the 512 electrodes. Thus, pixels on the LCD 22 are respectively scanned to thereby display a predetermined image on the LCD 22.

The electrical arrangement of the computer unit 1 will be described more fully with reference to FIG. 5.

As shown in FIG. 5, it will be seen that the CPU 41 is coupled to a variety of ICs or the like through a bus line 57. A read only memory (ROM) 51 stores therein, in addition to a system program for the entirety of this portable computer, a Kana-Kanji conversion program for a word processor function in the Japanese language, a dictionary table for such word processor function, a program for recognizing hand-written characters, a dictionary table for such recognition program and so on. A random access memory (RAM) 52 is a RAM for work area and stores therein data necessary for operation at any time. A back-up battery 54 (battery different from the foregoing battery 19) is connected to a back-up RAM 53 so as to back-up necessary data stored therein even when the power switch of the computer unit is turned off. A timer IC 55 is connected to the back-up battery 54 and counts a clock from a quartz oscillator 56 to derive data of year, month, day and time of the present timing point. The LCD controller 43 and the tablet controller 46 also are connected to the CPU 41 via the bus line 57.

An audio processor 58 generates a predetermined audio signal in response to input from the sockets 14 through 16 or to an instruction from the CPU 42 and supplies the same to an adder 59. An audio memory 61 is controlled by the CPU 41 to supply a predetermined audio signal (e.g., an alarm sound "What ?") stored therein in advance to the adder 59. The adder 59 adds the output signal from the audio processor 58 and the output signal from the audio memory 61 and supplies an added output signal to the speaker 9 via a sound volume controller 60. The volume change-over switch 12 is connected to the volume controller 60 and the volume is controlled by operating the volume change-over switch 12.

The fluorescent plate (back-light unit) 26 is supplied with a power from a power supply circuit 64 (this power supply circuit 64 is supplied with a power from the battery 19 or the AC adapter 17 when the power switch 2 is turned on) through an inverter circuit 63. Brightness of the fluorescent plate 26 can be switched in two stages (e.g., brightness suitable for a bright room and brightness suitable for a dark room) by switching the change-over switch 11 through the inverter circuit 63. Apart from the switching of the brightness of the fluorescent plate 26, brightness of the LCD 22 can be selected to be a desired value in multiple stages by controlling the brightness control switch 3. A switch 65a is turned on and off in response to the type of the battery 19 loaded on the computer unit 1, that is, whether the battery 19 is a primary battery or a secondary battery. A switch 65b is used to detect a capacity of the battery 19 and is turned on and off in response to the capacity of the battery 19. These switches 65a and 65b are coupled through the power supply circuit 64 to an key interface 62. The key interface 62 is coupled with the brightness control switch 3, the change-over switch 11, the stop switch 13 or the like. The key interface 62 supplies signals corresponding to on/off states of these switches to the CPU 41.

An IC card 70 is coupled to the socket 14 and the CPU 41 can receive and transmit data, program or the like from and to the IC card 70 through an IC card interface 66. Further, an adapter 71 is coupled to the sockets 15 and 16 and coupled to the CPU 41 via an extended interface 68.

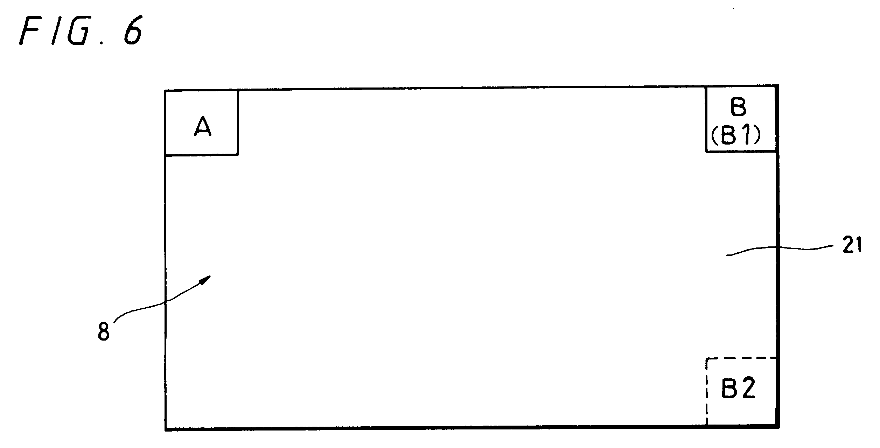

FIG. 6 shows the display screen 8 of FIG. 1 in an enlarged scale. With reference to FIG. 6, let us describe a relation between a specific area of the tablet 21 on the display screen 8 and contents of data stored in the ROM 51 (see FIG. 5) provided as the memory means of the present invention. The ROM 51 stores therein, in addition to a fundamental software (program), a special software (special program A) associated with a specific area A on the tablet 21 and a special function (additional) program (special program B) associated with a specific area B on the tablet 21 shown in FIG. 6, e.g., a monitor function program.

In that event, position coordinates of the specific areas A and B are associated with the special software and the special function program and stored in the ROM 51.

While the special program A is stored in the ROM 51, the special program A is operated independently of the fundamental program by special manipulation. Also, the special program B is added to the fundamental program and can be operated on the fundamental program by special manipulation.

As described above, since the special programs A and B are not used by an ordinary user (or inhibited from being utilized by ordinary users), they are made to be not utilized by the ordinary user. Therefore, the special programs A and B cannot be utilized only when the user executes the special manipulation.

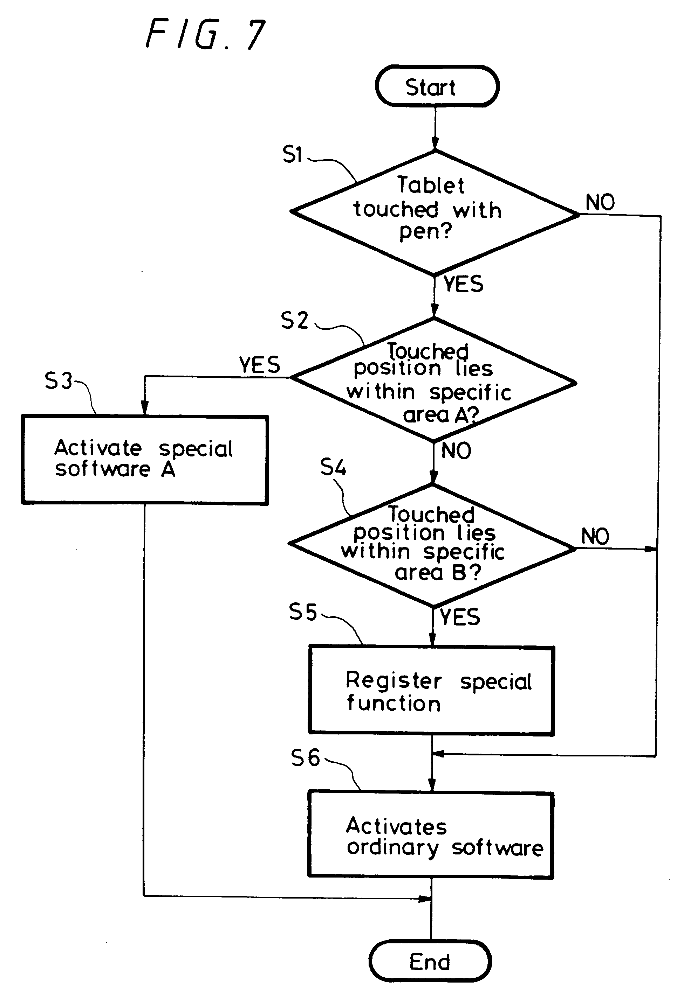

Operation of the present invention will be described below also with reference to FIG. 7 forming a flowchart. FIG. 7 is the flowchart showing an embodiment of the present invention.

(1) When the power switch 2 of the portable computer shown in FIG. 1 is turned on, if the user does not touch the tablet 21 of the display screen 8 of the computer unit 1 with the pen 6, then position coordinate data of the pen 6 is not supplied from the tablet controller 46 to the CPU 41 so that the CPU 41 activates the ordinary software (fundamental program) (in steps S1, S6).

When the power switch 2 is turned on, if the user touches the area except the special areas A and B on the tablet 21 with the pen 6, then position coordinate data of the pen 6 detected is supplied from the tablet controller 46 to the CPU 41. Then, it is determined by the CPU 41 on the basis of position coordinate data of the specific areas A and B stored in the ROM 51 that the position (pen-down) touched by the pen 6 lies outside the specific areas A and B. Therefore, the CPU 41 activates the ordinary software (fundamental program) (see steps S1, S2, S4 and S6).

(2) When the power switch 2 of the portable computer shown in FIG. 1 is turned on, if the user touches a surface within the range of the specific area A on the tablet 21 with the pen 6 (i.e., pen-down), then position coordinate data of the pen 6 detected is supplied from the tablet controller 46 to the CPU 41. It is determined by the CPU 41 on the basis of position coordinate data of the specific areas A and B stored in the ROM 51 that the position touched with the pen 6 lies within the range of the specific area A. Then, the CPU 41 activates the special software (special program A) associated with the specific area A stored in the ROM 51, e.g., a demonstration software for a shop front previously-set (steps S1 through S3).

(3) When the power switch 2 of the portable computer shown in FIG. 1 is turned on, if the user touches a surface within the range of the specific area B on the tablet 21 with the pen 6 (pen-down), then position coordinate data of the pen 6 detected is supplied from the tablet controller 46 to the CPU 41. Then, it is determined by the CPU 41 on the basis of position coordinate data of the specific areas A and B stored in the ROM 51 that the pressed position of the pen 6 lies within the range of the specific area B. The CPU 41 registers the special function program (special program B) associated with the specific area B stored in the ROM 51, e.g., the monitor function program previously-set in the back-up RAM 53 so as to involve the same in the ordinary software (fundamental program) (steps S1, S2, S4, S5). Thereafter, the CPU 41 activates the ordinary software (fundamental program) (at step S6). Then, during the portable computer is driven by the ordinary software, the aforementioned special function, e.g., the previously-set monitor function can be executed similarly to the original ordinary function.

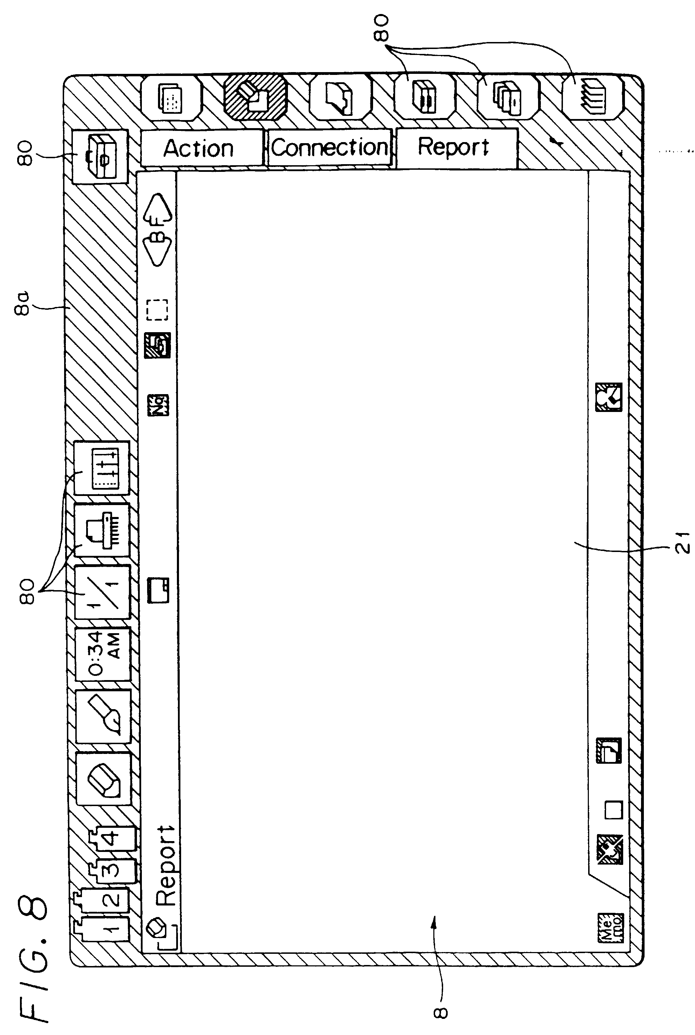

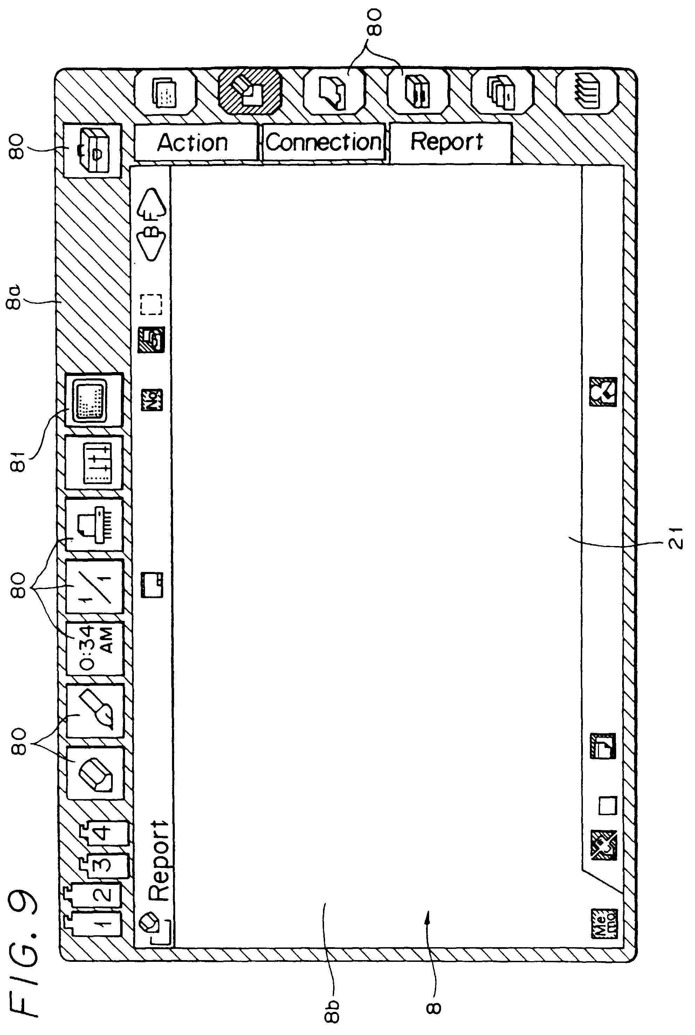

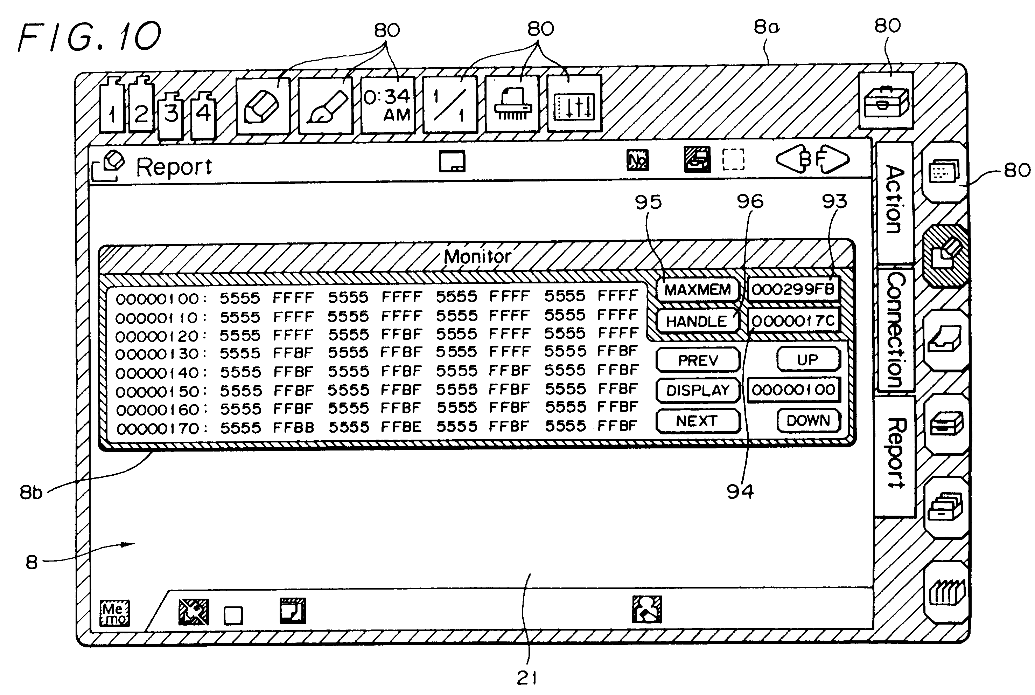

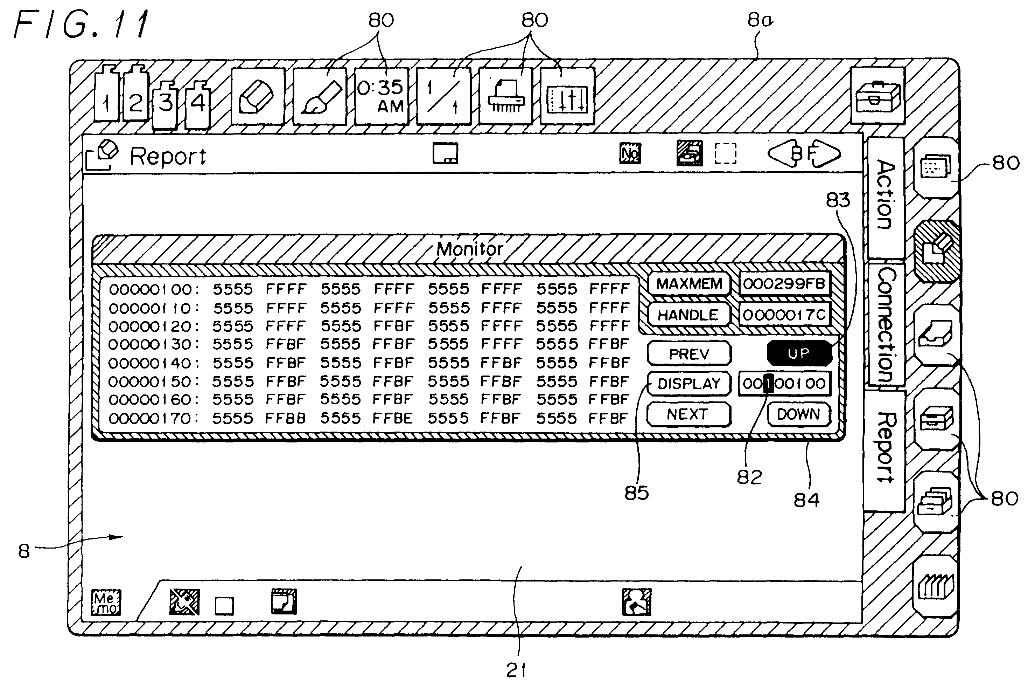

Let us describe with reference to examples of pictures shown in FIGS. 8 through 15 the case such that the monitor function is previously set as the special function on the item (3) and this monitor function is operated by the ordinary software to thereby digitally correct the parallax of the pen. FIG. 8 shows the display screen 8 of FIG. 1 in an enlarged scale, FIG. 9 shows the display screen of FIG. 1 to which the present invention is applied in an enlarged scale and FIGS. 10 to 15 are respectively enlarged views of the display screen of FIG. 1 in which the parallax is corrected by using the monitor function.

When the power switch 2 is turned on,if the user does not touch the tablet 21 with the pen 6 or the user touches the area on the tablet 21 except the specific areas A, B with the pen 6, then the CPU 41 activates the ordinary software as earlier noted (see steps S1, S6: S1, S2, S4, S6). In that event, the display screen 8 of FIG. 1 is presented as shown in FIG. 8, wherein a "monitor" icon is not displayed on an icon display area 8a because the monitor function is not involved in the ordinary software as the special function. Accordingly, during this ordinary software is operated, the monitor function provided as the special function except the original ordinary function cannot be effected.

While many icons 80, which can be utilized in the ordinary software are displayed on the icon display area 8a, icons that can be utilized on the ordinary software through not shown are collectively housed in a "tool" icon 80.

Next, when the power switch 2 is turned on, if the user touches the surface within the range of the specific area B on the tablet 21 with the pen 6, then the CPU 41 registers the monitor function in the back-up RAM 53 so as to be involved in the ordinary software (fundamental program) and then activates the ordinary software (fundamental program) (steps S1, S2, S4, S5, S6), as earlier noted.

In this case, a "monitor" icon 81 is displayed on the icon display area 8a as shown in FIG. 9. Accordingly, if the user touches the "monitor" icon 81 with the pen 6 (pen-down), drags the "monitor" icon 81 to the display area 8b by the pen 6 and takes the pen 6 up (pen-up), then the CPU 41 determines on the basis of the position coordinate data of the pen 6 from the tablet controller 46 the position to be displayed and displayed contents of the memory to be displayed, i.e., data (e.g., data for correcting parallax of pen, that is, value of parallax correction and stored address thereof) previously set and which are stored in the back-up RAM 53 are displayed as shown in FIG. 10.

A method of correcting pen parallax by numerals will be described below. The parallax correction of this embodiment will be defined briefly as follows: If the user touches a predetermined point displayed on the LCD 22 with the top of the pen 6, then a cursor is displayed on the LCD 22 at the position of the penpoint detected by the tablet 21. In this case, however, since the tablet 21 is interposed between the LCD 22 and the pen 6 and the LCD 22 and the pen 6 are distant from each other by a small distance. As a result, it is frequently observed that the point pushed by the penpoint of the pen 6 and the real displayed position are seemed to be displaced from each other. This displacement must be corrected so as to match with operation feeling in actual practice, which might be a so-called parallax correction. Incidentally, the tool box depicted by the "tool" icon 80 contains an icon which is used to perform the parallax correction in an analog fashion and this "tool" icon 81 can be clicked so that the user can correct the parallax in an analog fashion. In actual practice, this analog parallax correction depends upon user's subjectivity visual judgement and therefore such analog parallax correction is rough and poor in accuracy. For this reason, the parallax correction is executed in a digital fashion.

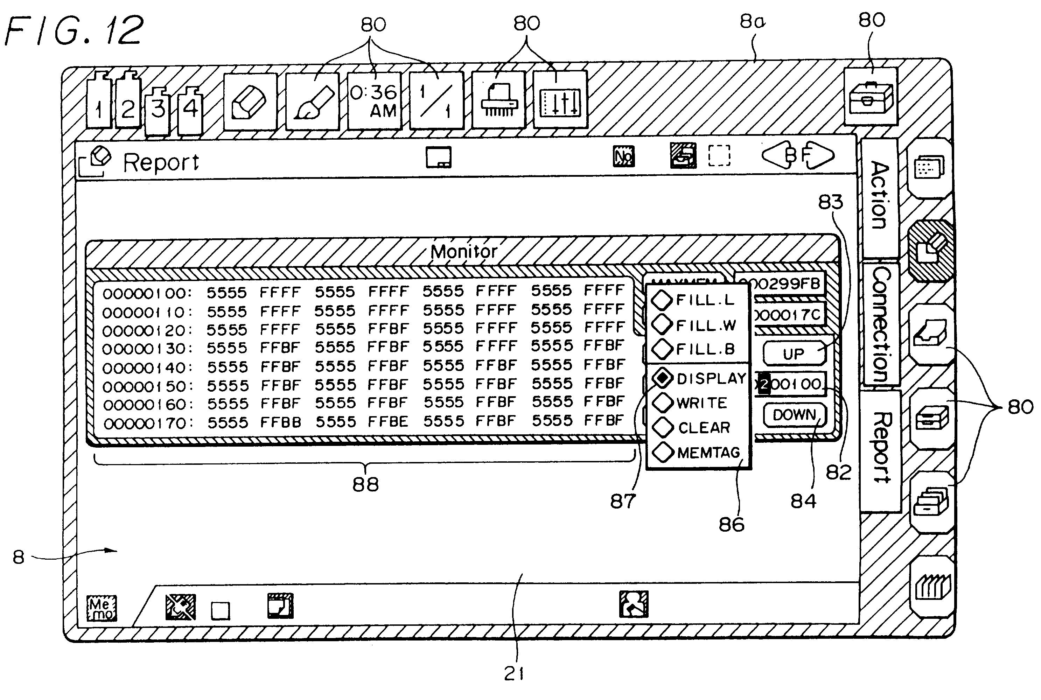

Then, the user designates an address in which a value of parallax to be corrected is stored. Then, the user selects (touches) a desired digit to be changed on an address display portion 82 with the pen 6 (the selected digit is inverted from black to white) and depresses an up (UP) button 83 or a down (DOWN) button 84 with the pen 6 to increment or decrement the address value one by one, thereby a desired address value being obtained. After completion of the change of the address value to the desired address value, if the user pushes (touches) a display (DISPLAY) button 85 with the pen 6, then a pop up menu 86 is displayed as shown in FIG. 12.

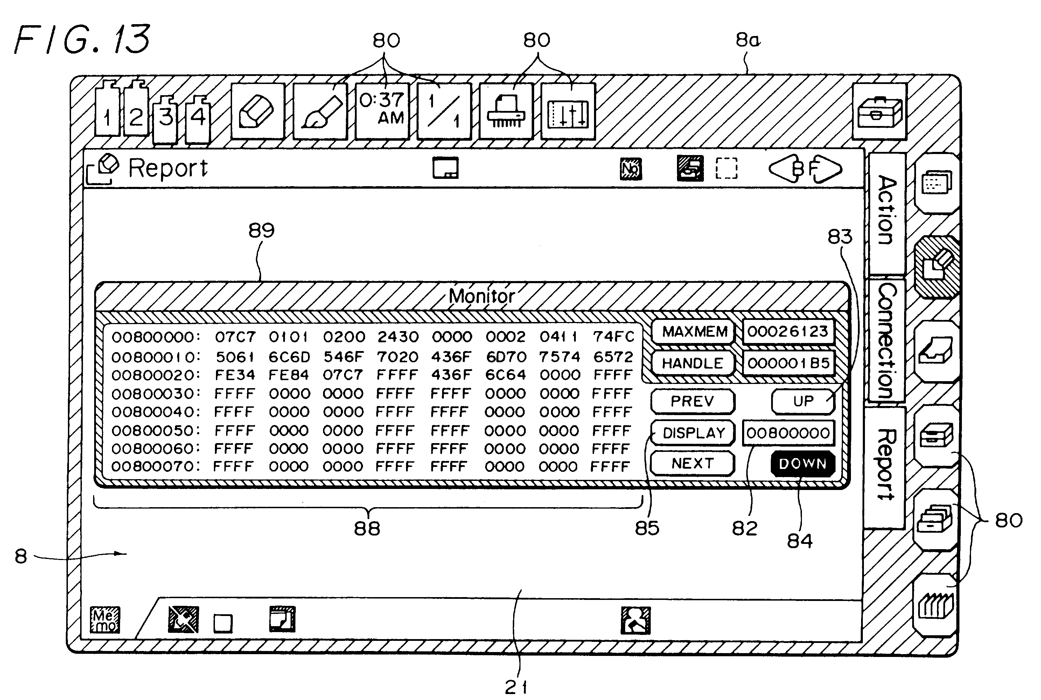

In FIG. 12, in order to display the content of the desired address, the user might select a display (DISPLAY) button 87 from the pop up menu 86 (a mark of the selected DISPLAY is inverted from white to black in color) . Then, the content of the address designated on the address display portion 82 is displayed on a display area 88 as shown in FIG. 13.

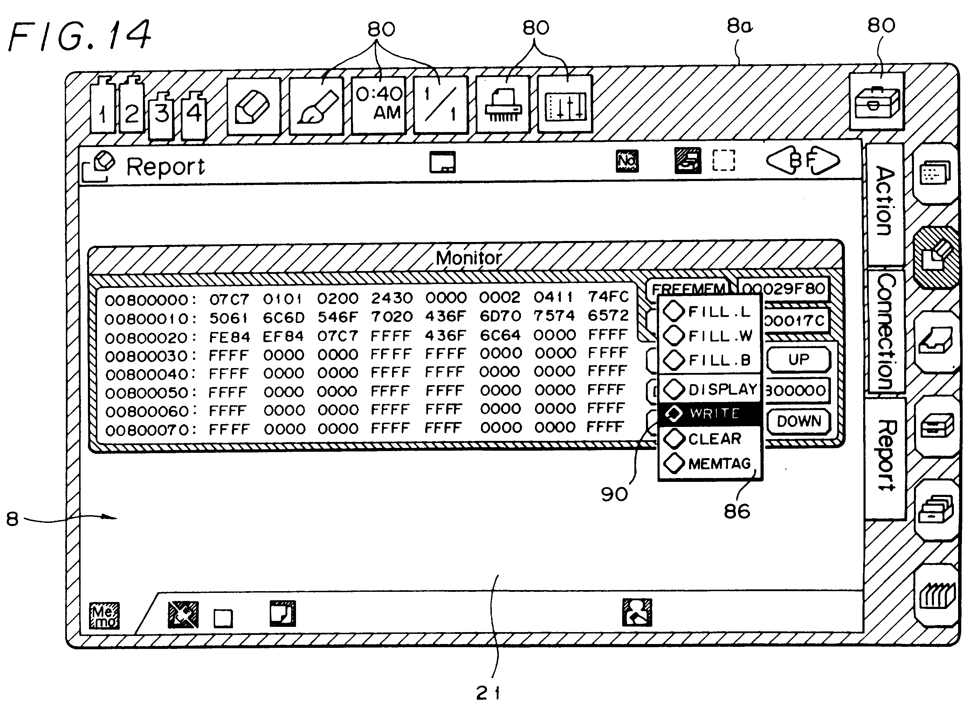

Then, the content of the address displayed on the display area 88 (value of parallax correction in this embodiment) is rewritten. Then, the user touches the content (data on a portion depicted by reference numeral 89 in FIG. 13) of memory of address to be rewritten of the contents of memory of address displayed on the display area 88 with the pen so that the selected content, i.e., data is inverted from black to white in color as shown in FIG. 13. Incidentally, the CPU 41 causes the data touched with the pen 6 to be displayed in the inverted form of from black to white in color as shown in FIG. 13. Then, the user increments or decrements one by one data (data on the portion 89) of the placed touched by the pen 6 by depressing the up (UP) button 83 or down (DOWN) button 84 by the pen 6, whereby the above data is changed to the desired value. After completion of this change, the user might touch the display button 85 with the pen 6. Then, the pop up menu 86 is displayed one more time on the display screen 8 of FIG. 13 as shown in FIG. 14.

In the display screen 8 of FIG. 14, if the user selects (touches) a write (WRITE) button 90 from the pop up menu 86 thus displayed with the pen 6, then the tablet controller 46 supplies data indicative of the selection of the write (WRITE) button 90 to the CPU 41, whereby the changed content is written in the back-up RAM 53 by the CPU 41. Thus, the parallax can be corrected from a numeral standpoint.

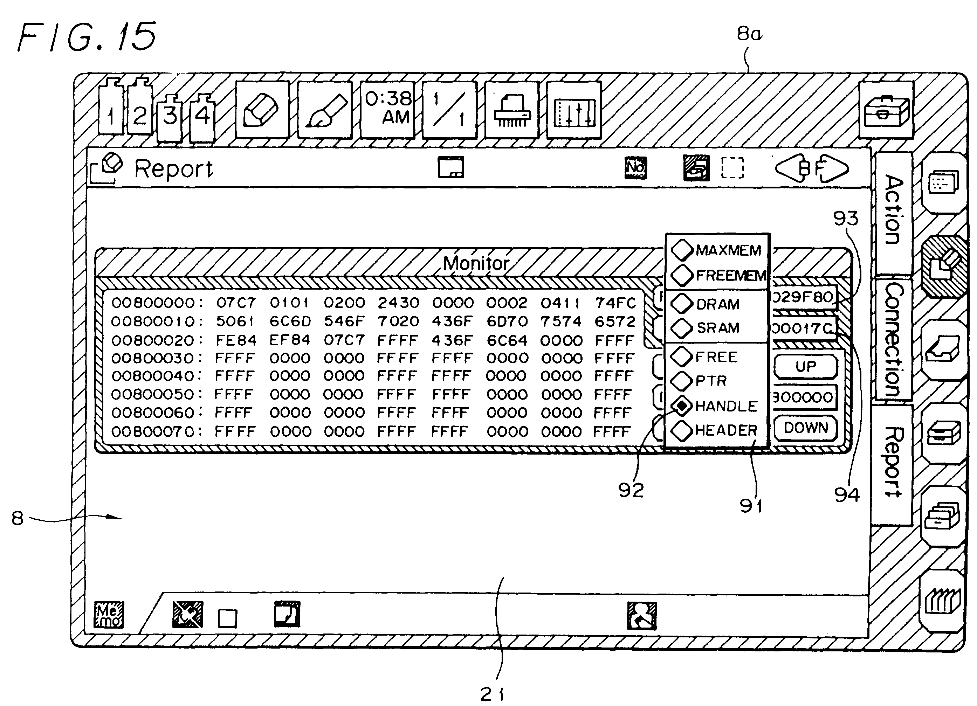

If the user touches a maxmemo (MAXMEM) button 95 (or a handle (HANDLE) button 96) with the pen 6 in the state shown in FIG. 10, a pop up menu 91 is displayed as shown in FIG. 15. If the user touches or selects any of items displayed on the pop up menu 91 (the handle (HANDLE) is selected in FIG. 15) with the pen 6, then the button 95 (or 96) is replaced with the selected item and data concerning the item thus selected is displayed on a display area 93 (or 94) provided on the right of the pop up menu 91, whereby the capacity of the RAM 52 (when the MAXMEM is selected) and the empty capacity (when a FREEMEM is selected) can be displayed on the display areas 93 and 94.

As described above, the monitor function operable as the special function is added to the ordinary software and the additionally-provided monitor function is operated by using the ordinary software similarly to the ordinary function, thereby the above-mentioned parallax correction being carried out.

While the monitor function operable as the special function is added to the ordinary software and operated by the ordinary software as described above, the present invention is not limited thereto and one such variant also is possible:
In the portable computer shown in FIG. 1, as the special function associated with the predetermined area B (see FIG. 6) on the tablet 21, a copy function program is previously set in the ROM 51 instead of the monitor function program and this copy function program is involved in the ordinary software, thereby the copy function being effected by the ordinary software drive.

In this case, if the portable computer is powered up normally, then a "copy" icon is not displayed on the display screen 8 of the computer unit 1 of the portable computer, which is very convenient for inhibiting the "copy" function from being utilized as the special function usually because the frequent copying operation consumes much power. When the user wants to effect the copy function, if the user depresses a surface within the range of the predetermined area B (B1) on the tablet 21 of the display screen 8 shown in FIG. 6 with the pen 6, then the CPU 41 adds the copy function program stored in the ROM 51 to the ordinary software and registers the same in the back-up RAM 53. Then, the CPU 41 controls the LCD 22 via the LCD controller 43 so as to display the "copy" icon on the icon display area 8a of the display screen 8. Thus, when the user wants to copy sentences made on the display screen during the ordinary software is activated and operated, if the user pushes the "copy" icon with the pen 6, then the copy function is effected to copy the sentences.

While one specific area A and one specific area B are provided on the tablet 21 as shown in FIG. 6 in this embodiment, the present invention is not limited thereto and can be applied to the case such that a plurality of specific areas A and a plurality of specific areas B are provided on the tablet 21. For example, if there are two special functions (special function programs), i.e., two special functions of monitor function and copy function, as shown in FIG. 6, then the monitor function (monitor function program) may be associated with the specific area B (B1) on the tablet 21 shown in FIG. 6 and the copy function (copy function program) may be associated with the specific area B2 (shown by a dashed-line block) on the tablet 21 of FIG. 6. In this case, it is needless to say that the flowchart forming FIG. 7 must be modified so as to determine whether or not the designated position at which the tablet 21 is touched with the pen 6 falls within the range of the specific areas B1 and B2.

Incidentally, if the number of the specific areas A and B are increased as in A1 to An and B1 to Bn, then it becomes impossible to understand which specific area is associated with which special software or special function. Further, if the specific areas are small, then it becomes impossible to for the user to touch the place of a corresponding area with the pen 6 before the power switch 2 is turned on. In the above cases, if a sheet-like tablet on which the specific areas A (A1 to An) and B (B1 to Bn) and corresponding special softwares and special functions are written is placed on the tablet 21 and the user designates (presses) the particular area of the special software and special function with the pen 6, then it becomes possible to carry out special operation accurately with ease.

Further, if the size of the specific areas A (A1 to An) and B (B1 to Bn) on the tablet 21 is reduced, then it becomes possible to reduce the possibility that the ordinary user will carry out the above-mentioned special operation (carry out the special operation inadvertently).

While the input means of electrostatic capacity type utilizing the pen 6 on the tablet 21 is employed as the input means for designating the predetermined area on the input display screen as described above, the present invention is not limited thereto and an input means of piezoelectric type or an input means using a light-pen may be utilized.

Furthermore, while the information processing apparatus of the present invention is applied to the portable computer as described above, the present invention is not limited thereto and may be applied to a wide variety of electronic apparatus.

If the information processing apparatus of the present invention is employed, then the following effects can be achieved:

If a predetermined area on the input display screen is designated when the power switch is turned on, the special function (special function program) associated with the designated predetermined area is added to the ordinary software and this ordinary software is activated, thereby making it possible for only the specific user to utilize the special program; and
since the special function (additional program) is added to the ordinary software (fundamental program) and the special function is executed while the hardware is not modified, the fundamental program in which the additional program is incorporated in advance and the fundamental program in which the additional program is not incorporated need not be prepared separately in order to execute the additional function. Thus, the capacity of the memory can be reduced and the information processing apparatus of the invention can be made inexpensive.

## Claims

1. An information processing apparatus comprising:
(a) a coordinate information inputting device (6, 21) for pointing to a predetermined area;
(b) a memory (52) for storing a basic program and an additional program;
(c) a power switch (2); and
(d) a controller (41, 46) for performing control such that, when said power switch (2) is operated and said inputting device (6, 21) points to said predetermined area, said additional program is added to said basic program and said additional program and said basic program are operated in parallel.

2. The information processing apparatus according to claim 1, further comprising a display (22) for displaying an information concerning said each program.

3. The information processing apparatus according to claim 2, wherein, when a condition such that said additional program is added to said basic program is selected, an icon corresponding to said condition is displayed on said display (22).

4. The information processing apparatus according to anyone of claims 1 to 3, wherein said additional program and said predetermined area are plural in kind and each said predetermined area is corresponding to each said additional program.

5. An information processing apparatus according to claim 1, further comprising:
a display (22) for displaying an information concerning said each program;
said coordinate information inputting device (6, 21) comprises a pen (6) for pointing to a coordinate position and a tablet (21) pointed at by said pen (6) for detecting a coordinate information, said tablet (21) having said predetermined area,
said controller (41, 46) performs said control when said power switch (2) is operated and said pen (6) points to said predetermined area.

6. The information processing apparatus according to claim 5, wherein said display (22) is formed under said tablet (21) for displaying an image which is visible through said tablet (21).

7. The information processing apparatus according to claim 5 or 6, wherein, when a condition such that said additional program is added to said basic program is selected, an icon corresponding to said condition is displayed on said display (22), while, when said icon is pointed to by said pen (6), said additional program starts.

8. The information processing apparatus according to anyone of claims 5 to 7, wherein said additional program and said predetermined area are plural in kind and each said predetermined area is corresponding to each said additional program.

9. The information processing apparatus according to claim 6 or 7, wherein said condition is prepared for special persons, such as a serviceman.

## Patentansprüche

1. Informationsverarbeitungsgerät, welches umfaßt:
(a) eine Koordinateninformations-Eingabeeinrichtung (6, 21) zum Zeigen auf einen vorgegebenen Bereich;
(b) einen Speicher (52) zum Speichern eines Grundprogramms und eines Zusatzprogramms;
(c) einen Hauptschalter (2); und
(d) eine Steuerung (41, 46) zur Durchführung einer Steuerung, so daß, wenn der Hauptschalter (2) betätigt wird und die Eingabeeinrichtung (6, 21) auf den vorgegebenen Bereich zeigt, das Zusatzprogramm zum Grundprogramm hinzugefügt wird und das Zusatzprogramm und das Grundprogramm parallel betrieben werden.

2. Informationsverarbeitungsgerät nach Anspruch 1, welches außerdem eine Anzeigeeinrichtung (22) umfaßt, um eine Information, die jedes Programm betrifft, anzuzeigen.

3. Informationsverarbeitungsgerät nach Anspruch 2, wobei, wenn ein Zustand, derart, daß das Zusatzprogramm zum Grundprogramm hinzugefügt ist, ausgewählt wird, ein Icon, welches diesem Zustand entspricht, auf der Anzeigeeinrichtung (22) angezeigt wird.

4. Informationsverarbeitungsgerät nach einem der Ansprüche 1 bis 3, wobei das Zusatzprogramm und der vorgegebene Bereich vielfältig sind und jeder vorerwähnte vorgegebene Bereich jedem vorerwähnten Zusatzprogramm entspricht.

5. Informationsverarbeitungsgerät nach Anspruch 1, welches außerdem aufweist:
eine Anzeigeeinrichtung (22) zum Anzeigen einer Information, die jedes Programm betrifft;
die Koordinateninformations-Eingabeeinrichtung (6, 21) einen Griffel (6) umfaßt, um auf eine Koordinatenposition zu zeigen, und ein Tablett (21), auf welches der Griffel (6) zeigt, um eine Koordinateninformation zu ermitteln, wobei das Tablett (21) den vorgegebenen Bereich aufweist,
die Steuerung (41, 46) die genannte Steuerung ausführt, wenn der Hauptschalter (2) betätigt ist und der Griffel (6) auf den vorgegebenen Bereich zeigt.

6. Informationsverarbeitungsgerät nach Anspruch 5, wobei die Anzeigeeinrichtung (22) unter dem Tablett (21) gebildet ist, um ein Bild, welches durch das Tablett (21) hindurch sichtbar ist, anzuzeigen.

7. Informationsverarbeitungsgerät nach Anspruch 5 oder 6, wobei, wenn ein Zustand, bei dem das Zusatzprogramm zum Grundprogramm hinzugefügt wird, ausgewählt wird, ein Icon, welches diesem Zustand entspricht, auf der Anzeigeeinrichtung (22) angezeigt wird, während, wenn durch den Griffel (6) auf das Icon zeigt, das Zusatzprogramm startet.

8. Informationsverarbeitungsgerät nach einem der Ansprüche 5 bis 7, wobei das Zusatzprogramm und der vorgegebene Bereich vielfältig sind und jeder vorerwähnte vorgegebene Bereich jedem vorerwähnten Zusatzprogramm entspricht.

9. Informationsverarbeitungsgerät nach Anspruch 6 oder 7, wobei der vorerwähnte Zustand für spezielle Personen, beispielsweise eine Kundendienstperson vorbereitet ist.

## Revendications

1. Appareil de traitement d'information comprenant :
(a) un dispositif d'entrée d'information de coordonnées (6, 21) pour pointer sur une zone prédéterminée ;
(b) une mémoire (52) pour stocker un programme de base et un programme additionnel ;
(c) un commutateur de mise en route (2) ; et
(d) un contrôleur (41, 46) pour réaliser une commande qui est telle que, lorsque ledit commutateur de mise en route (2) est activé et que le dispositif d'entrée (6, 21) pointe sur ladite zone prédéterminée, ledit programme additionnel est additionné audit programme de base et ledit programme additionnel et ledit programme de base sont activés en parallèle.

2. Appareil de traitement d'information selon la revendication 1, comprenant en outre un affichage (22) pour afficher une information concernant ledit chaque programme.

3. Appareil de traitement d'information selon la revendication 2, dans lequel, lorsqu'une condition qui est telle que ledit programme additionnel est additionné audit programme de base est sélectionnée, une icône correspondant à ladite condition est affichée sur ledit affichage (22).

4. Appareil de traitement d'information selon l'une quelconque des revendications 1 à 3, dans lequel ledit programme additionnel et ladite zone prédéterminée sont de plusieurs types et chaque dite zone prédéterminée est en correspondance avec chaque dit programme additionnel.

5. Appareil de traitement d'information selon la revendication 1, comprenant en outre :
un affichage (22) pour afficher une information concernant ledit chaque programme ;
ledit dispositif d'entrée d'information de coordonnées (6, 21) comprend un crayon (6) pour pointer sur une position de coordonnées et une tablette (21) pointée par ledit crayon (6) pour détecter une information de coordonnées, ladite tablette (21) comportant ladite zone prédéterminée ;
ledit contrôleur (41, 46) réalise ladite commande lorsque ledit commutateur de mise en route (2) est activé et que ledit crayon (6) pointe sur ladite zone prédéterminée.

6. Appareil de traitement d'information selon la revendication 5, dans lequel ledit affichage (22) est formé au-dessous de ladite tablette (21) pour afficher une image qui est visible au travers de ladite tablette (21).

7. Appareil de traitement d'information selon la revendication 5 ou 6, dans lequel, lorsqu'une condition qui est telle que ledit programme additionnel est additionné audit programme de base est sélectionnée, une icône qui correspond à ladite condition est affichée sur ledit affichage (22), tandis que, lorsque ladite icône est pointée par ledit crayon (6), ledit programme additionnel démarre.

8. Appareil de traitement d'information selon l'une quelconque des revendications 5 à 7, dans lequel ledit programme additionnel et ladite zone prédéterminée sont de plusieurs types et chaque dite zone prédéterminée est en correspondance avec chaque dit programme additionnel.

9. Appareil de traitement d'information selon la revendication 6 ou 7, dans lequel ladite condition est préparée pour des personnes spéciales telles qu'une personne de maintenance.
